# EUROPEAN PATENT SPECIFICATION

(11) **EP 4 505 110 B1**
(45) Date of publication and mention of the grant of the patent: **06.05.2026**
(21) Application number: 23714563.6
(22) Date of filing: 28.03.2023
(51) Int. Cl.: F21V 8/00

(54) **LASER LIGHTING SYSTEM COMPRISING OPTICAL FIBER**
LASERBELEUCHTUNGSSYSTEM MIT OPTISCHER FASER
SYSTÈME D'ÉCLAIRAGE LASER COMPRENANT UNE FIBRE OPTIQUE

(30) Priority: 01.04.2022 EP 22166267
(43) Date of publication of application: 12.02.2025
(73) Proprietor: Signify Holding B.V., 5656 AE Eindhoven (NL)
(72) Inventor: VAN BOMMEL, Ties, 5656 AE Eindhoven (NL); CORNELISSEN, Hugo Johan, 5656 AE Eindhoven (NL); HIKMET, Rifat Ata Mustafa, 5656 AE Eindhoven (NL); VDOVIN, Olexandr Valentynovych, 5656 AE Eindhoven (NL)
(74) Representative: Verweij, Petronella Daniëlle
(86) International application number: PCT/EP2023/058029
(87) International publication number: WO 2023/186916

(56) References cited:
- WO-A1-2013/140484
- WO-A1-2020/083647
- DE-A1- 102006 061 164
- US-A1- 2010 238 374

## Description

### FIELD OF THE INVENTION

The invention relates to a light generating system comprising an optical fiber. The invention further relates to a lighting device comprising the light generating system.

### BACKGROUND OF THE INVENTION

Optical fiber based lighting systems are known in the art. WO2021040623A1, for instance, describes an optical fiber that includes a core region having a scattering structure defined therein, the scattering structure being twisted about a longitudinal axis of the core region, wherein the scattering structure is configured to scatter light propagating in the optical fiber out of the optical fiber. A lighting apparatus having the optical fiber and a method for forming the optical fiber are also described in WO2021040623A1.

US2010/238374A discloses backlight with a fiber lamp. The fiber lamp has a side-emitting fiber with a core layer for guiding light and a cladding layer arranged around the core layer. The cladding layer allows light to be extracted from a surface of the cladding layer. A light source is arranged on one or both of a pair of end surfaces of the side-emitting fiber and emitting single-color light. A phosphor layer is arranged on the surface of the cladding layer.

DE102006061164 discloses a light-emitting device comprising a radiation source for emitting radiation of at least a first wavelength and an elongated, curved light-conducting body into which the radiation emitted by the radiation source is coupled and which, due to the coupled-in radiation of the first wavelength, decouples light at an angle to its longitudinal axis.

### SUMMARY OF THE INVENTION

The use of optical fibers to transmit light is known in the art. However, light generating systems that utilize transmission of light from the surface of the optical fiber are still actively developed. Light generating systems known in the art may require additional light sources to be configured within the system. This may be disadvantageous as the light sources may have to be housed within such a light generating system. This may lead to: (i) undesirable heating of the system, (ii) a requirement to route power to the system, and (iii) cumbersome maintenance in case of malfunction.

The use of laser light sources is known in the art, however, providing lighting distributed over a region of space using a single laser light source (for example: in an office, a room, a car) is still a challenge. Providing lighting systems within building materials such as concrete walls or between glass panels is difficult, especially if light sources and power supply units have to (also) be configured in these locations.

Mixing light from different sources to provide a plurality of light of different colors, wavelengths and spectral power distributions may require using a plurality of light sources, which may increase the complexity of the system (due to the large number of elements that have to be configured within it). Using a plurality of light sources may make the light generating system bulky and may be difficult to maintain. This may be disadvantageous, especially when the light generating systems are configured in a less than ideal locations for example: within building materials, in the lining of car interiors, etc.

Hence, it is an aspect of the invention to provide an alternative light generating system, which preferably further at least partly obviates one or more of above-described drawbacks. The present invention may have as object to overcome or ameliorate at least one of the disadvantages of the prior art, or to provide a useful alternative.

According to a first aspect, the invention provides a light generating system ("system"). In embodiments, the light generating system may comprise a light generating device ("device"). Especially, the light generating system may comprise an optical fiber. The light generating system, in embodiments, may comprise a light generating unit. Hence, in embodiments, the light generating system may comprise a light generating device, an optical fiber, and a light generating unit. Further, in embodiments, the light generating device may be configured to generate device light. Especially in embodiments, the device light may comprise a first wavelength. In embodiments, the light generating device may comprise a solid-state light source. In embodiments, the optical fiber may comprise an elongated body of light transmissive material. Additionally, the elongated body of light transmissive material may be transmissive for the device light comprising the first wavelength. Further, the optical fiber may comprise a light entrance part. In embodiments, the optical fiber may have a length L1 (or total fiber length). Further, in embodiments, the optical fiber may comprise an elongated outer surface over at least part of its length L1. The light entrance part of the optical fiber may be irradiated with the device light. Especially, the optical fiber may be configured such that upon irradiating the light entrance part with the device light (comprising the first wavelength) over at least part of its length L1, second light escapes from the optical fiber via the elongated outer surface. In embodiments, the light generating unit may comprise a light chamber ("chamber"). Further, the light chamber may comprise a reflective internal surface. Yet further, the light chamber may be reflective for the second light. In embodiments, the light chamber may comprise a chamber exit window. The chamber exit window may be transmissive for the second light. Hence, the light chamber may comprise a reflective internal surface (reflective for the second light) and a chamber exit window (transmissive for the second light). In embodiments, at least part of the optical fiber may have a chamber fiber length L2. Especially, at least part of the optical fiber (having a chamber fiber length L2) may be configured within the light chamber. At least part of the optical fiber (having a chamber fiber length L2) may have n1 curvatures in a plane parallel to a length axis (A) of the optical fiber. Further, in embodiments, at least part of the optical fiber configured within the light chamber may have n1 curvatures such that n1≥1. In embodiments, the light generating system may be configured to generate system light. Especially, the system light may comprise at least part of the second light. Further, the system light (comprising at least part of the second light) may at least be escaped from the light chamber via the chamber exit window. Hence, in specific embodiments, the invention provides a light generating system comprising a light generating device, an optical fiber, and a light generating unit. Especially, the light generating device may be configured to generate device light comprising a first wavelength, wherein the light generating device comprises a solid-state light source. Further, the optical fiber may comprise an elongated body of light transmissive material, transmissive for the device light comprising the first wavelength. Additionally, the optical fiber may comprise a light entrance part. Especially, the optical fiber may have a length L1 and an elongated outer surface over at least part of its length L1. The optical fiber may be configured such that upon irradiating the light entrance part with the device light comprising the first wavelength, over at least part of its length L1 second light escapes from the optical fiber via the elongated outer surface. Further, the light generating unit may comprise a light chamber. Especially, the light chamber may comprise a reflective internal surface, reflective for the second light, and a chamber exit window, transmissive for the second light. Additionally, at least part of the optical fiber having a chamber fiber length L2 may be configured within the light chamber with n1 curvatures in a plane parallel to a length axis (A) of the optical fiber, wherein n1≥1. Especially, the light generating system may be configured to generate system light comprising at least part of the second light (escaped from the light chamber via the chamber exit window).

With such a system, optical fibers may be used to transmit light along the optical fiber and (also) provide light from at least part of the surface of the optical fiber. The system may provide the advantage of providing a light generating unit that utilizes this light (provided by the optical fiber). The system may provide the advantage of controlling the intensity, spectral power distribution and color of light outcoupled form the light generating unit. The system may provide the advantage of controlling the aforementioned parameters by a number of configurational choices such as: (i) the spatial orientation of optical fiber(s) within the light generating system, (ii) the number of curvatures the optical fiber comprises, (iii) the use of luminescent materials on the surface of the optical fiber, and (iv) the extent of scattering of light outcoupled from the light generating system. The system may further provide the advantage of configuring a number of light generating units such that they all use a single optical fiber, hence lighting a space (for example a car, or an apartment, or an office) using a single optical fiber. The system may also be used to provide high brightness light sources which may be used in applications such as projection, stage-lighting, spot-lighting and automotive lighting. The use of the optical fiber (alone) to provide illumination is advantageous especially when the lighting system is provided within building material such as in concrete or between panes of glass. Further, the light generating system may use a single diode laser to illuminate a large space by means of the optical fiber. For instance, with an optical fiber a planar lamp may be provided.

In embodiments, the light generating system comprises an optical fiber. An optical fiber (or "fiber") may be a flexible, transparent fiber made by drawing glass (silica), or plastic, or polymer (for example Polymethyl Methacrylate Polymer (PMMA)). **In** embodiments, the optical fiber may comprise a core, further comprising a core material, such as glass (silica), a light transmissive polymer, or other light transmissive material.

Total internal reflection (TIR) in this context is known to the skilled person as the reflection of light, when light traveling within the core of the optical fiber contacts the boundary of the core at a steep angle (larger than a certain critical angle) and is reflected. Further, it is apparent to the skilled person that this critical angle may be determined as the arcsine of the ratio of the refractive index of the core material to the refractive index of the material at the boundary of the core of the optical fiber. It is (further) known to the skilled person that the refractive index of a material is defined in dependence of the wavelength of light. In embodiments, total internal reflection may be used in optical fibers to confine light in the core of the optical fiber. Because the light must strike the boundary (of the core) with an angle greater than the critical angle, only light that enters the optical fiber within a certain range of angles may travel down the fiber without leaking out. Hence, the optical fiber may have light guiding properties.

In embodiments, the optical fiber may (also) be configured to allow light to escape (or leak out) from the outer surface of the optical fiber. The choice of core material may determine the critical angle for total internal reflection. Hence, in embodiments the optical fiber may (also) be configured such that the light travelling in the core strikes the boundaries of the optical fiber at an angle lower than the critical angle, thus transmitting at least part of the light outside the optical fiber. Therefore, the light travelling in the optical fiber may be incident upon the boundary at an angle lower than the critical angle such as when the optical fiber is bent at the point of incidence. This may (also) lead to light outcoupling from the optical fiber. In embodiments, the optical fiber may be flexible and hence bent or twisted or arranged in innumerable other orientations. Thus, the optical fiber may (also) provide illumination. At bents, light propagating through the optical fiber may escape, see further also below.

In embodiments, the optical fiber may be configured such that light may leak out of the optical fiber due to scattering. Scattering structures (for use in (or on) the optical fiber) are known in the art and it is apparent to the skilled person that these structures may be used to configure the optical fiber to outcouple light. Especially, the core of the optical fiber may cause emissions through the boundary or outer surface of the core by means of scattering elements configured within the core of the optical fiber. Further, light scattering elements may comprise a linear or thread-like structures along the axis of the optical fiber. Yet further, the light scattering elements may comprise bubbles or particles. Furthermore, in embodiments, the linear light-scattering elements may be arranged in the cross-section of the optical fiber, which may provide the advantage of increasing the extent of directional outcoupling of device light. Hence, the optical fiber may be configured to propagate at least part of the light along the optical fiber, and to outcouple at least part of the light out of the optical fiber. The outcoupling of light from the optical fiber may provide illumination directly or indirectly. Direct illumination may here refer to illumination from the light outcoupled from the optical fiber. Indirect illumination may refer to providing illumination from another system, or unit, or apparatus, or element comprising the optical fiber. The term "outcoupling" here may refer to the escape of photons from a surface, or element, or system, or material, such as here e.g. the optical fiber.

In embodiments, the light generating system may comprise a light generating device. Especially, a light generating device may be a device configured to generate device light, wherein the device light may comprise a first wavelength. The term "first wavelength" may also refer to a plurality of different (first) wavelengths. Specifically, the device light may be chosen from one or more of UV radiation, visible light, or infra-red radiation. Especially, the device light may comprise one or more of violet light, blue light, green light, yellow light, orange light, red light, pink light, cyan light, or amber light. The terms "violet light" or "violet emission" especially relates to light having a wavelength in the range of about 380-440 nm. The terms "blue light" or "blue emission" especially relates to light having a wavelength in the range of about 440-495 nm (including some violet and cyan hues). The terms "green light" or "green emission" especially relate to light having a wavelength in the range of about 495-570 nm. The terms "yellow light" or "yellow emission" especially relate to light having a wavelength in the range of about 570-590 nm. The terms "orange light" or "orange emission" especially relate to light having a wavelength in the range of about 590-620 nm. The terms "red light" or "red emission" especially relate to light having a wavelength in the range of about 620-780 nm. The term "pink light" or "pink emission" refers to light having a blue and a red component. The term "cyan" may refer to one or more wavelengths selected from the range of about 490-520 nm. The term "amber" may refer to one or more wavelengths selected from the range of about 585-605 nm, such as about 590-600 nm. Hence, especially the device light and the system light comprise visible light.

In embodiments, the optical fiber may comprise an elongated body of light transmissive material. A light transmissive material is known to the skilled person as a material that allows light to be transmitted through it. The light transmissive material may be transmissive to device light, wherein, in embodiments, transmissivity of device light through the light transmissive material in a direction perpendicular to its surface may be at least 50%, such as at least about 75%, like in embodiments at least 90%, even more especially at least about 100%. Further, in embodiments, the light transmissive material may be a material such as glass or light transmissive polymeric material, such as PMMA. Further, the elongated body of light transmissive material may be transmissive for the device light comprising the first wavelength i.e. the light transmissive material may be transmissive (only) for light comprising the first wavelength. Hence, this may provide the advantage of filtering certain wavelengths i.e. this may provide the advantage of providing light of certain specific colors.

The length of the optical fiber and the type of light transmissive material may be chosen such that device light, propagating along a length axis of the optical fiber may be absorbed for less than 50%. In other words, the transmission of the optical fiber over its length may for device light propagating along the length axis of the optical fiber may be at least 50%, such as at least 75%, like in embodiments at least 90%, even more especially at least 95%. For the sake of this definition, it is assumed that there is no scattering. Of course, there may be scattering in the optical fiber, which may imply that at the end of the optical fiber, less than e.g. 95% of the device light is received.

In embodiments, the optical fiber may comprise a light entrance part. The light entrance part may essentially be the entry point for the device light. Especially, the light entrance part may be configured to receive light from the light generating device. Further, the light entrance part may be directly coupled with the light generating device i.e. physically attached to the light source. In specific embodiments, the device light may be provided to the light entrance part via a lens. This may be particularly advantageous in embodiments where the light source does not provide light as a collimated beam. Hence, the lens may help align the light source radiation or light into a collimated beam.

Especially, the light entrance part may be configured external of the light chamber. In other embodiments, the light entrance part may be configured within the light chamber. The optical fiber may comprise the light entrance part and a light exit part (see also below). Especially, at least one of the light entrance part and the light exit part may be configured external of the light chamber (see further also below).

Particularly, the optical fiber may have a length (L1). The length (L1), in embodiments, may be defined over the entire length of the optical fiber from the light entrance part (where the light source radiation enters the optical fiber) to the light exit part (i.e. a point along the axis of the optical fiber where the light eventually exits the optical fiber). The length L1 may be the length of the optical fiber would the optical fiber be configured in a straight configuration, without any curvatures. Note that the light exit part does not refer to the boundary of the optical fiber (where light may (also) be outcoupled). Especially, the optical fiber may comprise a length axis (A), which is an imaginary line along the center of the optical fiber and is parallel to the boundaries of the optical fiber. Further, the length axis may (thus) be rectilinear, or curved, or looped, or may assume other configurations. In embodiments, L1 may be at least 2 meter, especially at least 3 meter, more especially 4 meter, most especially 5 meter. For instance, the length L1 may be selected from the range of 2-10 m, though other values may also be possible.

Instead of a light exit part, in other embodiments there may be an optical fiber end part. Device light reaching the optical fiber end part may be reflected back in the direction of the light entrance part.

In embodiments, the optical fiber may have a circular cross section, a square cross section, or a regular polygonal cross section (such as pentagonal, hexagonal, and so on).

Further, the optical fiber may, in embodiments, comprise an elongated outer surface over at least part of its length L1, such as over at least 80%, like more especially at least 90% of its length (L1). Especially, the elongated outer surface may cover at least a part of the optical fiber such that the device light outcoupled from the core of the optical fiber may interact with the elongated outer surface. Further, in embodiments, the elongated outer surface may comprise a light transmissive material and hence, may outcouple the device light outcoupled from the core of the optical fiber. In specific embodiments, the optical fiber may comprise an elongated outer surface over the entire length L1. In some embodiments, the part of the optical fiber not covered by the elongated outer surface may not be transmissive for light, and thus may comprise an opaque layer part (different from the elongated outer surface) over a part of the optical fiber opaque to light. This may help limit the unwanted leaking or outcoupling of light in these parts. In specific embodiments, the opaque layer part may be reflective, and hence, may reflect scattered light from the light scattering elements back into the optical fiber. Especially, the opaque layer part may comprise light blocking coating along part of the optical fiber. Light blocking coatings may provide the advantage of selectively allowing light to emerge from only a part of the optical fiber, thus controlling the second light outcoupled from the optical fiber. In embodiments, the light entrance part of the optical fiber may be irradiated with the device light. In further embodiments, the optical fiber may be configured such that upon irradiating the light entrance part with the device light (comprising the first wavelength) over at least part of its length L1, second light escapes from the optical fiber via the elongated outer surface.

As second light may escape from the optical fiber via the elongated outer surface, the elongated outer surface may also be indicated as light emitting surface or light escape surface of the optical fiber. Would the optical fiber only comprise a core and no cladding, the elongated outer surface may be provided by part of the outer surface of the core. When the optical fiber comprises a core and a cladding, the elongated outer surface may be provided by part of the outer surface of the cladding. Especially, in embodiment the elongated outer surface may thus be a radially configured surface.

Further, in embodiments, the light generating system may comprise a light generating unit. Especially, the light generating system may amongst others provide system light by means of the light generating unit. Further, the light generating unit may comprise a light chamber. In further embodiments, the light chamber may comprise a reflective internal surface. Especially, the light chamber may be reflective for the second light. Further, the light chamber may comprise a chamber exit window. The chamber exit window, in embodiments, may be transmissive for the second light.

Especially, in embodiments, the reflective internal surface may be a material such as polished metal, a mirror comprising glass (silica), reflective polymer material, for e.g. materials like BaSO₄, Al₂O₃, and MgO. In yet further embodiments, the light chamber may comprise a reflective internal surface (reflective for the second light) and a chamber exit window (transmissive for the second light). In embodiments, the chamber exit window may comprise a part of the light chamber for instance one side of a cuboidal (or polyhedral) box comprising the light chamber or one of the two sides of a cylinder.

The chamber exit window may (thus) comprise a light transmissive material. The light transmissive material may comprise one or more materials selected from the group consisting of a transmissive organic material, such as selected from the group consisting of PE (polyethylene), PP (polypropylene), PEN (polyethylene napthalate), PC (polycarbonate), polyurethanes (PU), polymethylacrylate (PMA), polymethylmethacrylate (PMMA) (Plexiglas or Perspex), polymethacrylimide (PMI), polymethylmethacrylimide (PMMI), styrene acrylonitrile resin (SAN), cellulose acetate butyrate (CAB), silicone, polyvinylchloride (PVC), polyethylene terephthalate (PET), including in an embodiment (PETG) (glycol modified polyethylene terephthalate), PDMS (polydimethylsiloxane), and COC (cyclo olefin copolymer). Especially, the light transmissive material may comprise an aromatic polyester, or a copolymer thereof, such as e.g. one or more of polycarbonate (PC), poly (methyl)methacrylate (P(M)MA), polyglycolide or polyglycolic acid (PGA), polylactic acid (PLA), polycaprolactone (PCL), polyethylene adipate (PEA), polyhydroxy alkanoate (PHA), polyhydroxy butyrate (PHB), poly(3-hydroxybutyrate-co-3-hydroxyvalerate) (PHBV), polyethylene terephthalate (PET), polybutylene terephthalate (PBT), polytrimethylene terephthalate (PTT), polyethylene naphthalate (PEN). Especially, the light transmissive material may comprise polyethylene terephthalate (PET). Hence, the light transmissive material is especially a polymeric light transmissive material. However, in another embodiment the light transmissive material may comprise an inorganic material. Especially, the inorganic light transmissive material may be selected from the group consisting of glasses, (fused) quartz, transmissive ceramic materials, and silicones. Also hybrid materials, comprising both inorganic and organic parts may be applied. Especially, the light transmissive material comprises one or more of PMMA, transparent PC, or glass.

Note that the light transmissive material of the optical fiber may also be selected from above defined materials.

In embodiments, at least part of the optical fiber may be configured within the light chamber. In further embodiments, at least part of the optical fiber may have a chamber fiber length L2. The length L2 may be the length of the optical fiber configured within the light chamber. In embodiments, the length of the fiber in the chamber may be 10% to 95% of the total fiber length (L1), especially 20% to 90%, more especially 30% to 85%, most especially 40%-80%. Especially, since at least a part of the optical fiber may be configured external to the light chamber (and hence also the light generating unit), L2 is of shorter length than L1 i.e. L2 < L1. For instance, the part of the optical fiber configured external of the light chamber may be selected from the range of 10-60%, such as 20-40% of the length L1 of the fiber.

The fiber lengths and the chamber fiber length may be defined along an axis of elongation of the fiber. These length may e.g. be determined as would the optical fiber be configured in a straight configuration, without any curvatures.

Would the light generating system comprise a plurality of light chambers sharing the same optical fiber, then the chamber fiber length may be the accumulated length in the respective light chambers.

In embodiments, at least part of the optical fiber (having a chamber fiber length L2) may have n1 curvatures in a plane parallel to a length axis (A) of the optical fiber. However, the length axis (A) may be configured in a non-planar configuration in certain embodiments, for example the optical fiber may be configured in a 3D orientation within a light chamber. Hence, the curvatures may (also) be configured along the optical fiber in a 3D configuration (within the light chamber). In embodiments, at least part of the optical fiber may have n1 curvatures such that n1≥1. A larger length of the optical fiber may be accommodated within the light generating unit, more especially within the light chamber, by curving the optical fiber. Curvature here may refer to any deviation in the rectilinear trajectory along any part of the optical fiber. Curving the optical fiber may provide the advantage of outcoupling light (device light or second light) at the curves of the optical fiber. This may further provide the advantage of increasing the amount of outcoupled light (device light or second light) from the optical fiber by increasing the number of curves comprised by the optical fiber. Further, the n1 curvatures may be distributed within the light chamber (comprised by the light generating unit) such that the curvatures are distributed according to a specific arrangement (or pattern). This may provide the advantage of controlling the spatial locations within the light generating unit from where light may be outcoupled.

Would there be more than one light chamber, the number of n1 curvatures may especially refer to the curvatures in one of the light chambers. Hence, the optical fiber may in each light chamber have n1 curvatures. Note that the number of curvatures in different light chambers may be the same or may differ.

In embodiments, the plane parallel to a length axis (A) of the optical fiber may especially be essentially parallel to a chamber exit window of the light chamber and/or essentially parallel to a bottom of the light chamber.

Especially, the light generating system may be configured to generate system light. In embodiments, the system light may comprise at least part of the second light.

The light generating system, in specific embodiments, may comprise an additional light source(s) configured within the light generating unit. In embodiments, the additional light source(s) may be configured within the light chamber.

The additional light source(s) may provide additional light source light. Further, in embodiments, the light outcoupled from the additional light source(s) may be outcoupled from the light generating unit via the chamber exit window. These additional light source(s) may (also) be configured external to the light generating unit in specific embodiments. Hence, the system light may comprise the second light, or light from additional light source(s), or both.

In further embodiments, the system light (comprising at least part of the second light) may at least escape from the light chamber via the chamber exit window.

In specific embodiments, the system light may essentially consist of the second light.

In embodiments, the system light escaped from the light chamber may comprise high intensity light. The light generating system, in embodiments, may be a high intensity light generating device, which may be configured to generate device light with an intensity of at least 10,000 lm/mm².

High intensity light may be produced by solid-state light source(s) such as static phosphor converted laser light sources which can give an intensity even up to about 20.000 lm/mm².

In embodiments, the light generating device may comprise a solid-state light source. Especially, the light generating device comprising a solid-state light source may be configured to provide device light. The solid-state light source, in embodiments, may be a blue light source, like a blue LED, or a green light source, such as a green LED, or a red light source, such as a red LED. Further, the solid-state light source may comprise a diode laser. In embodiments the device light may comprise diode laser light. In further embodiments, the solid-state light source may comprise a laser (or "laser light source" or "laser").

The term "laser light source" especially refers to a laser. Such a laser may especially be configured to generate device light having one or more wavelengths in the UV, visible, or infrared, especially having a wavelength selected from the spectral wavelength range of 200-2000 nm, such as 300-1500 nm. The term "laser" especially refers to a device that emits light through a process of optical amplification based on the stimulated emission of electromagnetic radiation. Especially, in embodiments the term "laser" may refer to a solid-state laser. Solid-state light sources in embodiments may (also) use organic light-emitting diodes (OLED), or polymer light-emitting diodes (PLED) as sources of illumination rather than electrical filaments, plasma (used in arc lamps such as fluorescent lamps), or gas. In embodiments, the terms "laser" or "solid state laser" or "solid state material laser" may refer to one or more of cesium doped lithium strontium (or calcium) aluminum fluoride (Ce:LiSAF, Ce:LiCAF), chromium doped chrysoberyl (alexandrite) laser, chromium ZnSe (Cr:ZnSe) laser, divalent samarium doped calcium fluoride (Sm:CaF₂) laser, Er:YAG laser, erbium doped and erbium-ytterbium codoped glass lasers, F-Center laser, holmium YAG (Ho:YAG) laser, Nd:YAG laser, NdCrYAG laser, neodymium doped yttrium calcium oxoborate Nd:YCa₄O(BO₃)₃ or Nd:YCOB, neodymium doped yttrium orthovanadate (Nd:YVO₄) laser, neodymium glass (Nd:glass) laser, neodymium YLF (Nd:YLF) solid-state laser, promethium 147 doped phosphate glass (147Pm³⁺:glass) solid-state laser, ruby laser (Al₂O₃:Cr³⁺), thulium YAG (Tm:YAG) laser, titanium sapphire (Ti:sapphire; Al₂O₃:Ti³⁺) laser, trivalent uranium doped calcium fluoride (U:CaF₂) solid-state laser, Ytterbium doped glass laser (rod, plate/chip, and fiber), Ytterbium YAG (Yb:YAG) laser, Yb₂O₃ (glass or ceramics) laser, etc. In yet further embodiments, the light source light may especially be a (collimated) laser light source light. In yet further embodiments, the light generating device may comprise one or more of an F center laser, an yttrium orthovanadate (Nd:YVO₄) laser, a promethium 147 doped phosphate glass (147Pm³⁺:glass), and a titanium sapphire (Ti:sapphire; Al₂O₃:Ti³⁺) laser. For instance, considering second and third harmonic generation, such light sources may be used to generated blue light. A laser may be combined with an upconverter in order to arrive at shorter (laser) wavelengths. For instance, with some (trivalent) rare earth ions upconversion may be obtained or with non-linear crystals upconversion can be obtained. Alternatively, a laser can be combined with a downconverter, such as a dye laser, to arrive at longer (laser) wavelengths. In specific embodiments, the terms "laser" or "laser light source", or similar terms, refer to a diode laser. In embodiments, the terms "laser" or "solid state laser" or "solid state material laser" may refer to one or more of a semiconductor diode lasers, such as GaN, InGaN, AlGaInP, AlGaAs, InGaAsP, lead salt, vertical cavity surface emitting laser (VCSEL), quantum cascade laser, hybrid silicon laser, etc. In further embodiments the solid-state light source may be a solid-state LED light source (such as a LED or diode laser). Especially, the solid-state light source may be a superluminescent diode. A superluminescent diode (SLED or SLD) is an edge-emitting semiconductor light source based on superluminescence. It provides the advantage of combining the high power and brightness of diode lasers with the low coherence of conventional light-emitting diodes. A vertical-cavity surface-emitting laser, or VCSEL, is known in the art and may especially be a type of semiconductor diode laser with laser beam emission perpendicular from the top surface, contrary to edge-emitting semiconductor lasers (also in-plane lasers) which emit from surfaces formed by cleaving the individual chip out of a wafer. VCSELs may be tunable in emission wavelength, as known in the art. For instance, Dupont et al., Applied Physics Letters 98(16):161105 - 161105-3, DOI:10.1063/1.3569591, or Wendi Chang et al., Applied Physics Letters 105(7):073303, DOI:10.1063/1.4893758, or Thor Ansbaek, IEEE Journal of Selected Topics in Quantum Electronics 19(4):1702306-1702306, DOI:10.1109/JSTQE.2013.2257164, or C.J. Chang-Hasnain, IEEE Journal of Selected Topics in Quantum Electronics (Volume: 6, Issue: 6, Nov.-Dec. 2000), DOI: 10.1109/2944.902146, or Kögel et al., IEEE Sensors Journal, December 2007, volume 7, no. 11, pages 1483-1489, or Jayaraman, et al., Electron Lett. 2012 Jul 5; 48(14): 867-869, doi: 10.1049/el.2012.1552, describe emission wavelength tunable VCSELs. Especially, with varying electrical voltage, the spectral power distribution of the VCSEL may vary. Hence, the term "VCSEL" may thus especially refer herein to a tunable VCSEL, as known in the art. Such tunable VCSELs may be based on MEMS technology. Such (tunable) VCSEL may also be indicated as "MEMS VCSEL". Therefore, in embodiments the diode laser may comprise a vertical-cavity surface-emitting laser (VCSEL) that has single-mode light emission and a long coherence length. The wavelength sweep may be implemented using a micro-electro-mechanical system (MEMS) to change the length of the laser cavity by which a stable and rapid wavelength sweep results. Hence, with a VCSEL different spectral power distributions may be generated. Especially, the VCSEL may be configured to generate (during operation of the VCSEL) laser light.

As indicated above, the light entrance part of the optical fiber may be irradiated with the device light. Hence, the light entrance part may be configured in a light receiving relationship with the light generating device. Or, in other word, the light entrance part may especially be configured downstream of the light generating device. In this way, device light may be coupled into the optical fiber.

Hence, light escaping from the optical fiber via the elongated outer surface may in embodiments essentially consist of incoupled device light.

In embodiments, the optical fiber may comprise a luminescent material configured to convert at least part of the device light into the converted device light. The solid-state light source, in embodiments, may be configured to provide light of a first wavelength and part of the device light comprising a first wavelength may be converted into luminescent material light or converted device light. Especially, the converted device light may be based on conversion by the luminescent material.

The term "luminescent material" especially refers to a material that can convert first radiation, especially one or more of UV radiation and blue radiation, into second radiation. In general, the first radiation and second radiation have different spectral power distributions. Hence, instead of the term "luminescent material", also the terms "luminescent converter" or "converter" may be applied. In general, the second radiation has a spectral power distribution at larger wavelengths than the first radiation, which is the case in the so-called down-conversion. In specific embodiments, however the second radiation has a spectral power distribution with intensity at smaller wavelengths than the first radiation, which is the case in the so-called up-conversion.

In embodiments, the "luminescent material" may especially refer to a material that can convert radiation into e.g. visible and/or infrared light. For instance, in embodiments the luminescent material may be able to convert one or more of UV radiation and blue radiation, into visible light. The luminescent material may in specific embodiments also convert radiation into infrared radiation (IR). Hence, upon excitation with radiation, the luminescent material emits radiation. In general, the luminescent material will be a down converter, i.e. radiation of a smaller wavelength is converted into radiation with a larger wavelength (λₑₓ<λₑₘ), though in specific embodiments the luminescent material may comprise up-converter luminescent material, i.e. radiation of a larger wavelength is converted into radiation with a smaller wavelength (λₑₓ>λₑₘ).

In embodiments, the term "luminescence" may refer to phosphorescence. In embodiments, the term "luminescence" may also refer to fluorescence. Instead of the term "luminescence", also the term "emission" may be applied. Hence, the terms "first radiation" and "second radiation" may refer to excitation radiation and emission (radiation), respectively. Likewise, the term "luminescent material" may in embodiments refer to phosphorescence and/or fluorescence.

The term "luminescent material" may also refer to a plurality of different luminescent materials. Examples of possible luminescent materials are indicated below. Hence, the term "luminescent material" may in specific embodiments also refer to a luminescent material composition. Instead of the term "luminescent material" also the term "phosphor". These terms are known to the person skilled in the art. Luminescent materials are known in the art.

Hence, the system light may comprise one or more of device light and converted device light. Hence, in embodiments the second light may comprise the device light, or converted device light, or both. Especially, the system light may comprise the second light (such as one or more the device light and optionally the converted device light) and optionally light from other another light source configured (within or external to the light generating unit, such as especially within the light chamber). A plurality of light sources may be used to provide different colored light. Hence, the system light, may in embodiments comprise a plurality of wavelengths, such as a plurality of different colors.

In embodiments, the optical fiber may comprise the core comprising the light transmissive material, and a cladding radially surrounding the core. In further embodiments, the optical fiber may further comprise light outcoupling elements. Especially, the cladding may surround the core radially. Optical fibers may comprise a core surrounded by a transparent cladding material with a lower index of refraction. Further, the optical fiber may comprise the elongated outer surface over at least a part of its length and a cladding over at least part of its length, such that the optical fiber comprises the elongated outer surface and the cladding along different parts of its length (such as when the opaque layer part is configured over the cladding). This may be useful in propagating light within the optical fiber (by means of TIR), while at the same time preventing any (undesired) outcoupling of light from the part comprising the cladding (by means of the opaque outer layer). In further embodiments, the elongated outer surface may be configured over the entirety of the cladding. However, in embodiments, the optical fiber may comprise (only) the core and the elongated outer surface. In some embodiments, the optical fiber may comprise a core, a cladding, and an elongated outer surface (configured over the cladding). In specific embodiments, the optical fiber may (also) act as a waveguide.

In embodiments, the light scattering elements may be comprised by the cladding. Especially, the light scattering elements may also be configured at the interface of the core and the cladding.

Further, in embodiments, the cladding may comprise a luminescent material, and hence may be luminescent depending on the device light provided to the optical fiber. The luminescent material may in embodiments be comprised by the optical fiber, such as the core of the optical fiber comprising a luminescent material layer, or the cladding comprising luminescent material, or a combination thereof. Therefore, in specific embodiments, the cladding may comprise the luminescent material.

In embodiments, the device light may comprise one or more of UV light and blue light. In embodiments, the second light may be white light.

In specific embodiments, the device light may be blue light incident on a phosphor. This may in embodiments realize almost full conversion of blue light, leading to emission of converted device light. Hence, in embodiments, garnet phosphors with relatively high stability and thermal conductivity may be used. However, also other phosphors may be applied. High bright light sources can be used in applications such as projection, stage-lighting, spot-lighting and automotive lighting. For this purpose, laser-phosphor technology may be used. Hence, in embodiments the light generating device may comprise a laser (see also above).

In embodiments, the second light may be a combination of white light or may be colored light. In further embodiments, the system light may be white light or may be colored light.

Part of the optical fiber, in embodiments, may comprise the elongated outer surface comprising a luminescent material, which may convert light of a wavelength different from that of the device light i.e. the converted device light (which may have a wavelength other than the first wavelength). In yet further embodiments, the light generating unit may comprise additional light sources which may provide light at another wavelength such as a third wavelength. Hence, the system light may comprise the second light (comprising the device light, or the converted device light, or both) and light from other light sources.

In embodiments, the system light provided by the light generating system may be in dependence of the location in the light chamber from which the second light is outcoupled. Furthermore, the system light provided by the light generating system may be in dependence of the number of locations from which the second light is outcoupled.

In embodiments, the light chamber may comprise an internal chamber length (L3) and an internal chamber width (W3), wherein L2>(n*sqrt(L3*W3)). In those embodiments where the light chamber does not have a cuboidal geometry, the chamber fiber length L2 may be configured such that L2>(2*π*A3), wherein A3 may be the radius of a sphere having the same the same volume as the light chamber. In such an embodiment, the chamber fiber length L2 may be sufficiently long such that it may be longer than the perimeter of the largest single circular loop of optical fiber that may be configured within the light chamber. Having a longer length of the optical fiber configured within the light chamber may provide the advantage of outcoupling more light from the exit window of the light chamber.

In embodiments the chamber fiber length may be configured such that L2>3*(π*sqrt(L3*W3)). In embodiments where the light chamber does not have a cuboidal geometry, the chamber fiber length L2 may be configured such that L2>3*(2*π*A3). In such embodiments, the chamber fiber length L2 may be sufficiently long such that it may be longer than three times the perimeter of the largest circular loop of optical fiber that may be configured within the light chamber. Hence, the optical fiber may be configured in multiple loops within the light chamber. Especially, the optical fiber may also be curved or bent at strategic locations along the length of the optical fiber such that the chamber fiber length L2 may be accommodated within the light chamber. This may provide the advantage of accommodating a longer length of optical fiber per unit volume of the light chamber. Having more bends or curvatures along the optical fiber may increase the amount of second light outcoupled from the optical fiber.

In embodiments, the optical fiber may have a fiber diameter (D1). In further embodiments, the n1 curvatures may have a curvature radius (Rc), wherein Rc<10*D1, such as e.g. Rc<9.5*D1. Further, in embodiments, D1 may be in a range from 0.1 to 3 mm, especially 0.2 to 2.5 mm, more especially 0.4 to 2.2 mm, most especially 0.5 to 2 mm.

The transmission and reflection of light propagating within the optical fiber may be in dependence of the angle of incidence at the boundary of the core of the optical fiber. An angle of incidence larger than the critical angle for total internal reflection may cause light propagating within the optical fiber to be reflected and thus propagated further along within the optical fiber. Alternatively, light incident at angles smaller than the critical angle for total internal reflection may be transmitted or outcoupled from the core of the optical fiber. Hence, the device light incident on the curvature comprised by the optical fiber may be incident at an angle smaller than the critical angle for total internal reflection. Hence, in embodiments, the device light may be outcoupled from the curvatures of the optical fiber. The amount of light outcoupled from the optical fiber may be in dependence of the radius of the curvature R_{c} of the optical fiber. The radius of curvature R_{c} of the optical fiber in embodiments may be configured such that the radius of curvature R_{c}<10*D1. In embodiments, the radius of curvature R_{c} of the optical fiber may be configured such that 30% of the device light is outcoupled, such as especially 50% of the device light is outcoupled, such as especially 80% of the device light is outcoupled, such as especially 95% of the device light is outcoupled, such as especially 99% of the device light is outcoupled, at the curvatures. Two or more curvatures may have the same radius of curvature or may have different radius of curvature.

Further, in embodiments, the number of curvatures n1 may be at least 4 or more. Therefore, the curvatures comprised by the optical fiber may (also) be sources of light. The amount of system light outcoupled from the light generating system may be in dependence of the spatial distribution of the curvatures within the light chamber. Hence, in embodiments, the optical fiber may comprise k1 curvatures per square centimeter, wherein k1>10. For example, the optical fiber may comprise 10 curvatures, such as especially 15 curvatures, such as especially 20 curvatures, such as especially 25 curvatures (wherein for example each curvature may be accommodated in a 5 mm * 5 mm area (i.e. 25 mm²)) such that k1 may be 40, such as especially 60, such as especially 80, such as especially 100. Especially, k1>2 i.e. the optical fiber may comprise at least three or more curvatures per square centimeter.

In embodiments, the curvatures may be arranged on the bottom surface of the light chamber (comprising the reflective internal surface). In further embodiments, the curvatures may be arranged on (all) the reflective internal surface(s) of the light chamber. The area may in embodiments e.g. be the area of the plane parallel to the length axis, wherein the plane is configured within the light chamber.

In embodiments, the curvatures may be distributed (uniformly) within the light chamber in a 2D (or 3D; see also below) spatial arrangement. Especially, the curvatures may be arranged such that an area (Ai) of the Voronoi cells from a 2D Voronoi tessellation of an area comprising a projection of the curvatures may be selected from the range of 0.7-1.3, such as especially 0.8-1.2, such as especially 0.9-1.1 times the average area of all the Voronoi cells in the 2D Voronoi tessellation. Voronoi tessellations (or "Voronoi diagram") are known in the art. See: Aurenhammer, Franz (1991). "Voronoi Diagrams - A Survey of a Fundamental Geometric Data Structure", ACM Computing Surveys. 23 (3): 345-405, doi:10.1145/116873.116880. S2CID 4613674, or Skyum, Sven (18 February 1991). "A simple algorithm for computing the smallest enclosing circle", Information Processing Letters, 37 (3): 121-125. doi:10.1016/0020-0190(91)90030-L., which contains an algorithm to compute the farthest-point Voronoi diagram, describe Voronoi tessellations and algorithms to generate said tessellations.

A 2D Voronoi tessellation refers to dividing a planar region into a subset of regions (or Voronoi cells), wherein each Voronoi cell encloses a single curvature such that any location within the Voronoi cell is closer to said curvature than any other curvature. For example, the light chamber comprising curvatures which are clustered or aggregated in any part of the light chamber would comprise Voronoi cell(s) with area(s) smaller than the average area of all Voronoi cells in the 2D Voronoi tessellation. Similarly, curvatures that are spaced apart from each other may comprise Voronoi cell(s) that are larger than the average area of all Voronoi cells in the tessellation. Hence, the variance of the Voronoi cells about the average area of all Voronoi cells in the 2D Voronoi tessellation may be an indicator of how uniformly the curvatures are distributed in a region (such as in the light chamber). Hence, in embodiments, the curvatures may be arranged uniformly (or distributed uniformly) such that the Voronoi cell comprising a curvature has an area (Ai) selected from 0.7-1.3, such as especially 0.8-1.2, such as especially 0.9-1.1 times the average area of all the Voronoi cells in the 2D Voronoi tessellation. In embodiments, the curvatures may be distributed in the volume comprised by the light chamber such that the area of the Voronoi cell(s) (in a projection (along a specific orientation) of the curvatures) has an area Ai selected from the range 0.7-1.3, such as especially 0.8-1.2, such as especially 0.9-1.1 times the average area of all the (projected) Voronoi cells in the 2D Voronoi tessellation.

In embodiments, the curvatures may essentially be configured in a 3D arrangement such that they are uniformly distributed. Similar to a 2D Voronoi tessellation, a 3D Voronoi tessellation refers to dividing a volume into a subset of volumes (or Voronoi cells), wherein each Voronoi cell encloses a single curvature such that any location within the Voronoi cell is closer to said curvature than any other curvature. Especially, the curvatures may be distributed in a 3D configuration or arrangement, such that the curvatures are uniformly distributed within the light chamber. Hence, in embodiments, the curvatures may be arranged such that a volume (Vi) of the Voronoi cells from a 3D Voronoi tessellation of a volume comprising the curvatures may be selected from the range of 0.7-1.3, such as especially 0.8-1.2, such as especially 0.9-1.1 times the average volume of all the Voronoi cells in the 3D Voronoi tessellation.

In embodiments, the (part of the) optical fiber (within the light chamber) may be configured in a meandering configuration. Especially, the optical fiber may follow a winding path comprising one or more hairpin turn(s). A hairpin turn (also hairpin bend or hairpin corner) is a bend in a path with a very acute inner angle, making it necessary for propagating light to turn about 180° to continue along the optical fiber. Hence, the curvature may take a hairpin turn.

In embodiments, the meandering configuration may have at least 3 turns, especially at least 6 turns, more especially at least 8 turns, more especially at least 10 turns. For instance, in embodiments the optical fiber may have 3-100 turns with a light chamber, like especially at least about 12 turns, like at least 20 turns.

In embodiments, the optical fiber may be configured in a stacked configuration (within the light chamber). Additionally, the optical fiber may be arranged in a 3D configuration by stacking one or more 2D configurations. That is, in embodiments, the optical fiber may be arranged in a 2D configuration and several such arrangement may be stacked to arrive at a 3D stacked arrangement using a single optical fiber. In further embodiments, these stacks may be stacked such that each 2D planar arrangement in the stack is rotated by an angle compared to the preceding stack by 30°, such as 60°, such as 90°, such as 120°, such as 180°.

In embodiments, the optical fiber may be configured in a spiral configuration (within the light chamber). Especially, the optical fiber may take a winding path in a continuous and gradually widening (or tightening) curve, either around a central point on a flat plane (such as the reflective internal surface of the light chamber) or about an axis to form a cone. Further, in embodiments, the optical fiber may be configured in a helical shape. Additionally, the optical fiber may be configured in an arrangement such as a corkscrew, or a spiral staircase (within the light chamber).

In embodiments, the spiral configuration may have at least 3 windings, especially at least 6 windings, more especially at least 8 windings, more especially at least 10 windings. In embodiments, a single light chamber may not comprise more than 50 windings, such as not more than 25 windings. However, other values may also be possible.

Furthermore, in embodiments, the optical fiber may be configured in an interleaved configuration (within the light chamber). Especially, the optical fiber may be arranged in alternating layers. In embodiments, the optical fiber may be arranged in the light chamber such that the optical fiber may be curved over itself. Further, the optical fiber in embodiments may be arranged in one or more 2D configuration where the planar arrangement(s) of the optical fiber are interleaved. Interleaved here may refer to alternating parts of the optical fiber that are placed above each other.

In embodiments, (also) part of the optical fiber may be configured external from the light chamber. During operation of the light generating device, at least part of the second light may escape from the optical fiber external from the light chamber. Especially, at least part of the optical fiber may be configured outside the light generating unit. In embodiments, the optical fiber may comprise the elongated outer surface on at least part of the optical fiber configured external from the light chamber.

In further embodiments, the optical fiber may comprise the cladding on at least part of the optical fiber configured external from the light chamber. Especially, the optical fiber may be configured to outcouple second light from at least part of the optical fiber configured external of the light chamber.

In embodiments, the light generating system may comprise a plurality of light generating units. In further embodiments, at least two light generating units may share parts of the same optical fiber. Especially, the light generating system may comprise a single optical fiber that may enter and exit a first light generating unit wherein the same optical fiber may enter and exit a second light generating unit. Each light generating unit may comprise a light chamber. In each light chamber, the optical fiber may comprise a plurality of curvatures (see also above).

Similarly, in embodiments, the same optical fiber may be routed through a plurality of light generating units. Hence, the plurality of light generating units may be configured to provide system light. In embodiments, the light generating system may comprise N light generating units, wherein N may be at least 3, especially at least 4, more especially at least 5, most especially at least 6. Further, the optical fiber may comprise at least a part configured outside the first and the second light generating unit, wherein the optical fiber may be configured to outcouple second light from at least part of the optical fiber configured outside the first and the second light generating units. In embodiments, the optical fiber may outcouple second light in at least part of the optical fiber configured external to a plurality of light generating units.

The light generating system comprises two or more optical fibers and two or more light generating devices, configured in two or more sets of each an optical fiber and one or more light generating devices, wherein the light entrance part is configured downstream from these one or more light generating devices. Therefore, the light entrance part of the optical fiber entering a subsequent light generating unit may be configured downstream of the light generating device (that provides device light to the optical fiber). Further, in embodiments, the light generating system may comprise a plurality of sets of each an optical fiber and one or more light generating devices.

Hence, a single light chamber may host at least parts of two (or more) different optical fibers, which may receive device light of two (or more) different light generating devices. In this way, more second light may be generated and/or second light having different spectral power distributions may be generated.

The spectral power distributions of the second light of two or more optical fibers is different. In embodiments, the spectral power distribution of system light outcoupled from each set (comprising one or more light generating devices) may be in dependence of the spectral power distribution of the second light outcoupled from the optical fiber comprised by that set. Hence, each set may comprise a different spectral power distribution of outcoupled system light, or second light outcoupled from at least part of the optical fiber configured external to the light generating units, or a combination thereof. In embodiments, the light generating system may be configured such that the spectral power distribution of the system light may be varied by varying the spectral power of the second light outcoupled from two or more of the optical fiber(s).

In embodiments, the light generating system may comprise one or more solid-state light source(s) to provide device light to the one or more optical fiber(s). Hence, the spectral power distribution of the one or more optical fibers may be varied by varying the spectral power distribution of the corresponding one or more solid-state light source(s).

Further, the color of the system light (comprising at least part of the second light) may be varied by varying the wavelength and intensity of the device light provided to the one or more optical fibers.

The light generating system further comprise a control system configured to control a spectral power distribution of the system light, e.g. by controlling the wavelength and intensity of light provided by the light generating device(s).

In further embodiments, the system light may comprise at least part of the second light of one or more optical fibers escaped from the one or more light chambers via the one or more chamber exit windows.

In specific embodiments, the control system may be configured to control one or more of the color rendering index (CRI), the correlated color temperature (CCT), and the color point of the system light.

In embodiments, the light chamber may comprise a cross-sectional shape selected from the group of circular, elliptical, rectangular and n-gonal, wherein n is at least 5. Here, n-gonal may refer to a regular polygon (i.e. polygon with sides of equal length) comprising n sides, such as at least 5. In further embodiments, the light chamber may comprise a 3D geometry such as a sphere, or a dome, or a polyhedron. Especially, the light chamber may comprise a geometry that is a combination of one or more of the aforementioned geometries. In alternative embodiments, the light chamber may comprise an oblate or prolate spheroid geometry.

In embodiments, the chamber exit window may comprise a diffuser for the second light. The diffuser may be a translucent or semi-transparent cover that spreads out or scatters light. Hence, the brightness of the system light provided may be controlled by means of a diffuser. Diffusers may further provide the advantage of providing soft light i.e. scattered light as opposed to beams of light. Further, in embodiments, the chamber exit window may comprise a luminescent material or a color filter. In embodiments, the reflective internal surface of the light chamber may be diffusively reflective. Diffusively reflective here refers to reflection of light from a surface such that a ray of light incident on the surface is scattered at many angles, rather than at a single angle as in the case of specular reflection. Hence, in embodiments, the light generating system may provide diffused system light. In further embodiments, the light generating system may comprise the optical fiber comprising a diffuser configured radially around the optical fiber, or may comprise the light chamber comprising reflective internal surfaces that are diffusively reflective, or both.

The light generating system may be part of or may be applied in e.g. office lighting systems, household application systems, shop lighting systems, home lighting systems, accent lighting systems, spot lighting systems, theater lighting systems, fiber-optics application systems, projection systems, self-lit display systems, pixelated display systems, segmented display systems, warning sign systems, medical lighting application systems, indicator sign systems, decorative lighting systems, portable systems, automotive applications, (outdoor) road lighting systems, urban lighting systems, green house lighting systems, horticulture lighting, digital projection, or LCD backlighting. The light generating system (or luminaire) may be part of or may be applied in e.g. optical communication systems or disinfection systems. As indicated above, the lighting unit may be used as backlighting unit in an LCD display device. Hence, the invention also provides an LCD display device comprising the lighting generating system as defined herein, configured as backlighting unit. The invention also provides in a further aspect a liquid crystal display device comprising a back lighting unit, wherein the back lighting unit comprises one or more light generating systems as defined herein.

In yet a further aspect, the invention may also provide a lamp or a luminaire comprising the light generating system as defined herein. The luminaire may further comprise a housing, optical elements, louvres, etc. etc... The lamp or luminaire may further comprise a housing enclosing the light generating system. The lamp or luminaire may comprise a light window in the housing or a housing opening, through which the system light may escape from the housing. In yet a further aspect, the invention also provides a projection device comprising the light generating system as defined herein. Especially, a projection device or "projector" or "image projector" may be an optical device that projects an image (or moving images) onto a surface, such as e.g. a projection screen. The projection device may include one or more light generating systems such as described herein. Hence, in an aspect the invention also provides a light generating device selected from the group of a lamp, a luminaire, a projector device, a disinfection device, a photochemical reactor, and an optical wireless communication device, comprising the light generating system as defined herein. The light generating device may comprise a housing or a carrier, configured to house or support, one or more elements of the light generating system. For instance, in embodiments the light generating device may comprise a housing or a carrier, configured to house or support one or more of the light generating devices.

The phrase "light having one or more wavelengths in a wavelength range" and similar phrases may especially indicate that the indicated light (or radiation) has a spectral power distribution with at least intensity or intensities at these one or more wavelengths in the indicated wavelength range. For instance, a blue emitting solid state light source will have a spectral power distribution with intensities at one or more wavelengths in the 440-495 nm wavelength range.

The phrase 2D or "2-D" or "two-dimensional", may in embodiments refer to an object (or structure or solid) having only two dimensions, such as a length and a width, and no thickness or height. The phrase 3D or "3-D" or "three-dimensional", may in embodiments refer to an object (or structure or solid) having three dimensions including length, depth, and width.

The phrases "different light sources" or "a plurality of different light sources", and similar phrases, may in embodiments refer to a plurality of solid-state light sources selected from at least two different bins. Likewise, the phrases "identical light sources" or "a plurality of same light sources", and similar phrases, may in embodiments refer to a plurality of solid-state light sources selected from the same bin.

The terms "upstream" and "downstream" relate to an arrangement of items or features relative to the propagation of the light from a light generating means (here the especially the light generating device), wherein relative to a first position within a beam of light from the light generating means, a second position in the beam of light closer to the light generating means is "upstream", and a third position within the beam of light further away from the light generating means is "downstream".

The term "visible light" especially relates to light having a wavelength selected from the range of 380-780 nm. Herein, UV (ultraviolet) may especially refer to a wavelength selected from the range of 190-380 nm, though in specific embodiments other wavelengths may also be possible. Herein, IR (infrared) may especially refer to radiation having a wavelength selected from the range of 780-3000 nm, such as 780-2000 nm, e.g. a wavelength up to about 1500 nm, like a wavelength of at least 900 nm, though in specific embodiments other wavelengths may also be possible. Hence, the term IR may herein refer to one or more of near infrared (NIR (or IR-A)) and short-wavelength infrared (SWIR (or IR-B)), especially NIR. The term "white light", and similar terms, herein, is known to the person skilled in the art. It may especially relate to light having a correlated color temperature (CCT) between about 1800 K and 20000 K, such as between 2000 and 20000 K, especially 2700-20000 K, for general lighting especially in the range of about 2000-7000 K, such as in the range of 2700 K and 6500 K.

In embodiments, e.g. for backlighting purposes, or for other purposes, the correlated color temperature (CCT) may especially be in the range of about 7000 K and 20000 K. Yet further, in embodiments the correlated color temperature (CCT) is especially within about 15 SDCM (standard deviation of color matching) from the BBL (black body locus), especially within about 10 SDCM from the BBL, even more especially within about 5 SDCM from the BBL. In specific embodiments, the correlated color temperature (CCT) may be selected from the range of 6000-12000 K, like selected from the range of 7000-12000 K, like at least 8000 K. Yet further, in embodiments the correlated color temperature (CCT) may be selected from the range of 6000-12000 K, like selected from the range of 7000-12000 K, in combination with a CRI of at least 70. In an embodiment, the light source may also provide light source light having a correlated color temperature (CCT) between about 5000 and 20000 K, e.g. direct phosphor converted LEDs (blue light emitting diode with thin layer of phosphor for e.g. obtaining of 10000 K). Hence, in a specific embodiment the solid-state light source may be configured to provide light with a correlated color temperature in the range of 5000-20000 K, even more especially in the range of 6000-20000 K, such as 8000-20000 K. An advantage of the relative high color temperature may be that there may be a relatively high blue component in the light source light.

The term "controlling" and similar terms especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc. Beyond that, the term "controlling" and similar terms may additionally include monitoring. Hence, the term "controlling" and similar terms may include imposing behavior on an element and also imposing behavior on an element and monitoring the element. The controlling of the element can be done with a control system, which may also be indicated as "controller". The control system and the element may thus at least temporarily, or permanently, functionally be coupled. The element may comprise the control system. In embodiments, the control system and element may not be physically coupled.

Control can be done via wired and/or wireless control. The term "control system" may also refer to a plurality of different control systems, which especially are functionally coupled, and of which e.g. one control system may be a master control system and one or more others may be slave control systems. A control system may comprise or may be functionally coupled to a user interface. The control system may also be configured to receive and execute instructions from a remote control. In embodiments, the control system may be controlled via an App on a device, such as a portable device, like a Smartphone or I-phone, a tablet, etc. The device is thus not necessarily coupled to the lighting system, but may be (temporarily) functionally coupled to the lighting system. Hence, in embodiments the control system may (also) be configured to be controlled by an App on a remote device. In such embodiments the control system of the lighting system may be a slave control system or control in a slave mode. For instance, the lighting system may be identifiable with a code, especially a unique code for the respective lighting system. The control system of the lighting system may be configured to be controlled by an external control system which has access to the lighting system on the basis of knowledge (input by a user interface of with an optical sensor (e.g. QR code reader) of the (unique) code.

The lighting system may also comprise means for communicating with other systems or devices, such as on the basis of Bluetooth, WIFI, LiFi, ZigBee, BLE or WiMAX, or another wireless technology. The system, or apparatus, or device may execute an action in a "mode" or "operation mode" or "mode of operation" or "operational mode". The term "operational mode may also be indicated as "controlling mode". Likewise, in a method an action or stage, or step may be executed in a "mode" or "operation mode" or "mode of operation" or "operational mode". This does not exclude that the system, or apparatus, or device may also be adapted for providing another controlling mode, or a plurality of other controlling modes. Likewise, this may not exclude that before executing the mode and/or after executing the mode one or more other modes may be executed. However, in embodiments a control system may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, that can only operate in a single operation mode (i.e. "on", without further tunability). Hence, in embodiments, the control system may control in dependence of one or more of an input signal of a user interface, a sensor signal (of a sensor), and a timer. The term "timer" may refer to a clock and/or a predetermined time scheme.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig. 1A-B schematically depict embodiments of the light generating system 1000, wherein an optical fiber 500 is configured within a light generating unit 1400;
Fig. 2A-C schematically depict embodiments of the light generating system 1000, comprising sets of one or more optical fibers 500 and one or more light generating units 1400 configured along each optical fiber 500;
Fig. 3 schematically depicts an embodiment of a lighting device 1200.

The schematic drawings are not necessarily to scale.

### DETAILED DESCRIPTION OF THE EMBODIMENTS

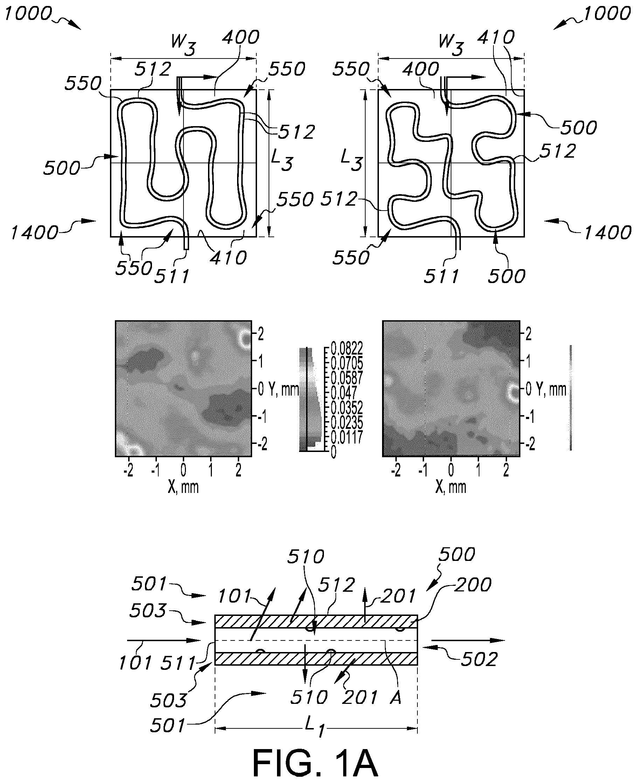

Fig. 1A schematically depicts an embodiment of the light generating system 1000 which may comprise a light generating device 100, an optical fiber 500, and a light generating unit 1400. Especially, the light generating device 100 may be configured to generate device light 101 comprising a first wavelength. In embodiments, the light generating device 100 may comprise a solid-state light source. Further, the optical fiber 500 may comprise an elongated body of light transmissive material, transmissive for the device light 101 comprising the first wavelength. The optical fiber 500, in embodiments, may comprise a core 502 comprising the light transmissive material, and a cladding 503 radially surrounding the core 502, wherein the optical fiber further comprises light outcoupling elements 510. Especially, the optical fiber 500 may comprise a light entrance part 511. In embodiments, the optical fiber 500 may have a length L1 and an elongated outer surface 512 over at least part of its length L1. Further, the optical fiber 500 may be configured such that upon irradiating the light entrance part 511 with the device light 101 comprising the first wavelength, over at least part of its length L1 second light 501 escapes from the optical fiber 500 via the elongated outer surface 512. Specifically, in embodiments, the optical fiber 500 may comprise a luminescent material 200 configured to convert at least part of the device light 101 into the converted device light 201. The light generating unit 1400 in embodiments may comprise a light chamber 400. Further, the light chamber 400 may comprise a reflective internal surface 410, and reflective for the second light 501. In embodiments, the light generating system 1000 may comprise n1 curvatures 550, wherein n1≥4. Additionally, in embodiments, the light generating system 1000 may comprise k1 curvatures 550 per square centimeter, wherein k1>10. The curvatures 550 in specific embodiments may be arranged such that an area (Ai) of the Voronoi cells from a 2D Voronoi tessellation of an area comprising a projection of the curvatures 550 is selected from the range of 0.7-1.3, such as especially 0.8-1.2, such as especially 0.9-1.1 times the average area of all the Voronoi cells in the 2D Voronoi tessellation. The figure further illustrates two embodiments of the light generating system comprising 12 curvatures (left) and 20 curvatures (right). The irradiance of the light generating system may vary in dependence of the number of curvatures provided and the location at which the curvatures are provided within the light generating unit. The irradiance of the two embodiments (embodiment with 12 curvatures and embodiment with 20 curvatures) in a cuboidal light generating unit (from a top view) is provided. The axes represent physical dimensions of the light generating unit i.e. along the length and the width and the colors represent the irradiance in W/mm².

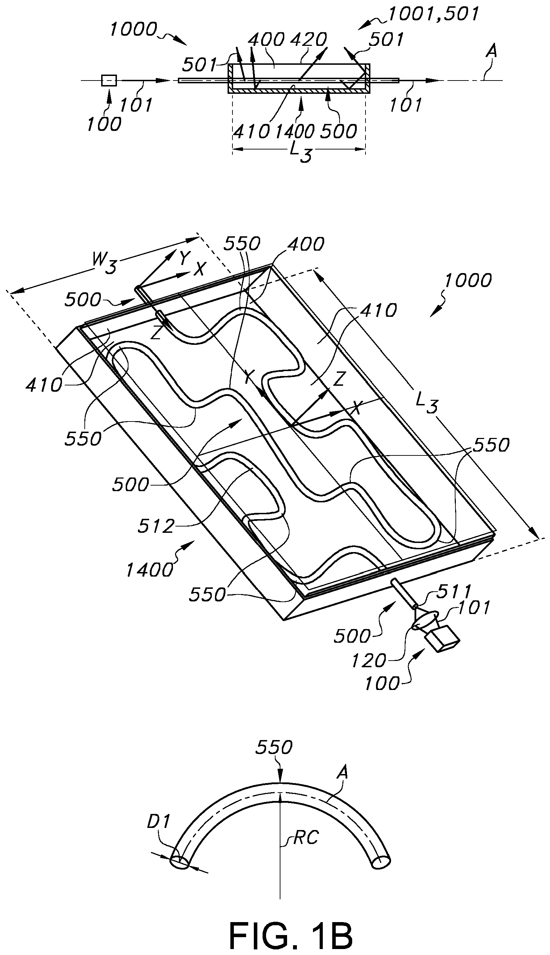

Fig. 1B schematically depicts an embodiment of the light generating system 1000 which may comprise a light generating device 100, an optical fiber 500, and a light generating unit 1400. Especially, the light generating device 100 may be configured to generate device light 101 comprising a first wavelength. in embodiments, the light generating device 100 may comprise a solid-state light source. Further, the optical fiber 500 may comprise an elongated body of light transmissive material, transmissive for the device light 101 comprising the first wavelength. The optical fiber 500 in embodiments may comprise a light entrance part 511. Further, in embodiments, the optical fiber 500 may have a length L1 and an elongated outer surface 512 over at least part of its length L1. Especially, the optical fiber 500 may be configured such that upon irradiating the light entrance part 511 with the device light 101 comprising the first wavelength, over at least part of its length L1 second light 501 escapes from the optical fiber 500 via the elongated outer surface 512. Further, the light generating unit 1400 may comprise a light chamber 400. In embodiments, the light chamber 400 may comprise a reflective internal surface 410, reflective for the second light 501, and a chamber exit window 420, transmissive for the second light 501. Especially, at least part of the optical fiber 500 having a chamber fiber length L2 may be configured within the light chamber 400 with n1 curvatures 550 in a plane parallel to a length axis (A) of the optical fiber 500, wherein n1≥1. In embodiments, the light generating system 1000 may be configured to generate system light 1001 comprising at least part of the second light 501 escaped from the light chamber 400 via the chamber exit window 420. Further, In embodiments, the solid-state light source may comprise a laser. Especially, the solid-state light source may comprise a diode laser. In specific embodiments, the device light 101 may comprise diode laser light. Further, the system light 1001 in embodiments may comprise one or more of device light 101 and converted device light 201. Especially, the optical fiber 500 may comprise a luminescent material 200 configured to convert at least part of the device light 101 into the converted device light 201. In further embodiments, the cladding may comprise the luminescent material 200. The device light 101 especially may comprise one or more of UV light and blue light, and wherein the system light 1001 is white light. In embodiments, the light chamber 400 may comprise an internal chamber length (L3) and an internal chamber width (W3); wherein L2>(π*sqrt(L3*W3)). In further embodiments, L2≥2*(π*sqrt(L3*W3)). In embodiments, the optical fiber 500 may have a fiber diameter (D1), wherein the n1 curvatures 550 have a curvature radius (Rc), wherein Rc<10*D1. In further embodiments, the light generating system 1000 may comprise n1 curvatures 550, wherein n1≥4. In embodiments, the light generating system 1000 may comprise k1 curvatures 550 per square centimeter, wherein k1>10. Especially, in embodiments, the curvatures 550 may be arranged such that an area (Ai) of the Voronoi cells from a 2D Voronoi tessellation of an area comprising a projection of the curvatures 550 is selected from the range of 0.7-1.3, such as especially 0.8-1.2, such as especially 0.9-1.1 times the average area of all the Voronoi cells in the 2D Voronoi tessellation.

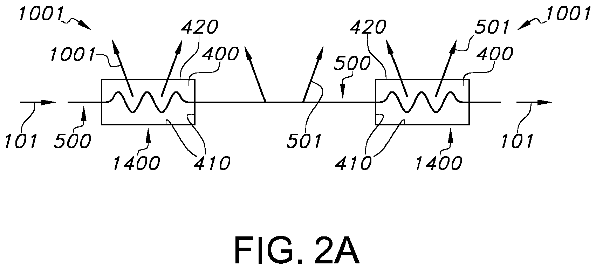

Fig. 2A schematically depicts an embodiment of the light generating system. In this embodiment, part of the optical fiber 500 may be configured external from the light chamber 400. Especially, during operation of the light generating device 100, part of the second light 501 may escape from the optical fiber external from the light chamber 400. In embodiments the system light 1001 may comprise part of the second light 501. The figure illustrates two light generating unit(s) 1400 configured along a single optical fiber 500. Especially, the part of the optical fiber 500 between the two light generating units (i.e. external to the light generating units) may be configured to provide second light 501. In embodiments, the light generating system the plurality of light generating units 1400 may share parts of the same optical fiber 500.

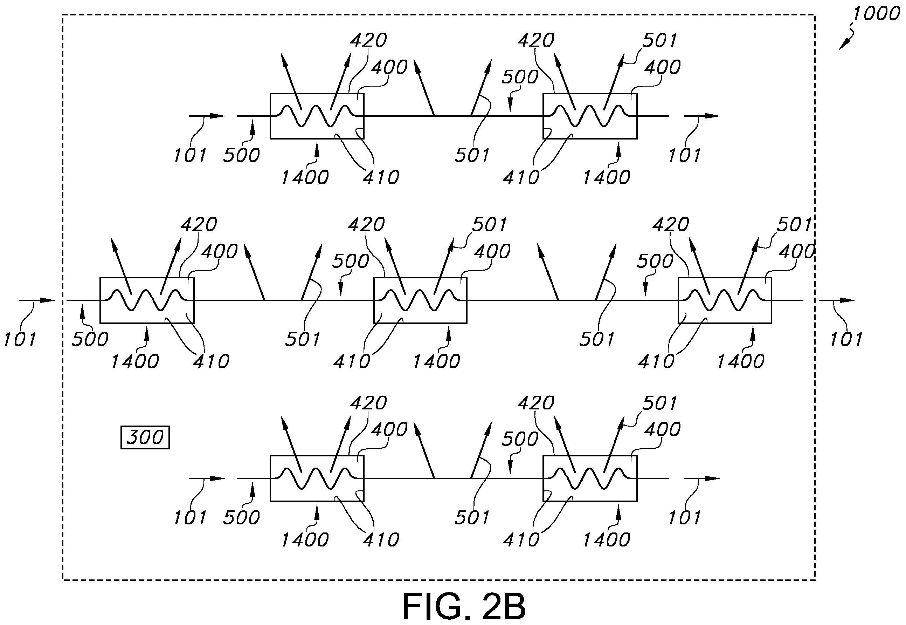

Fig. 2B schematically depicts an embodiment of the light generating system. In embodiments, the light generating system 1000 may comprise two or more optical fibers 500 and two or more light generating devices 100, configured in two or more sets of each an optical fiber 500 and one or more light generating devices 500. The figure depicts an embodiment comprising three optical fibers with two light generating units configured on the first and the third optical fibers and three light generating units configured on the second optical fiber. Hence, in embodiments, the light entrance part 511 may be configured downstream from these one or more light generating devices 100. Especially, the spectral power distributions of the second light 501 of two or more optical fibers 500 may be different. In specific embodiments, the light generating system 1000 may further comprise a control system 300 configured to control a spectral power distribution of the system light 1001. Especially, the system light 1001 may comprise at least part of the second light 501 of one or more optical fibers 500 escaped from the one or more light chambers 400 via the one or more chamber exit windows 420.

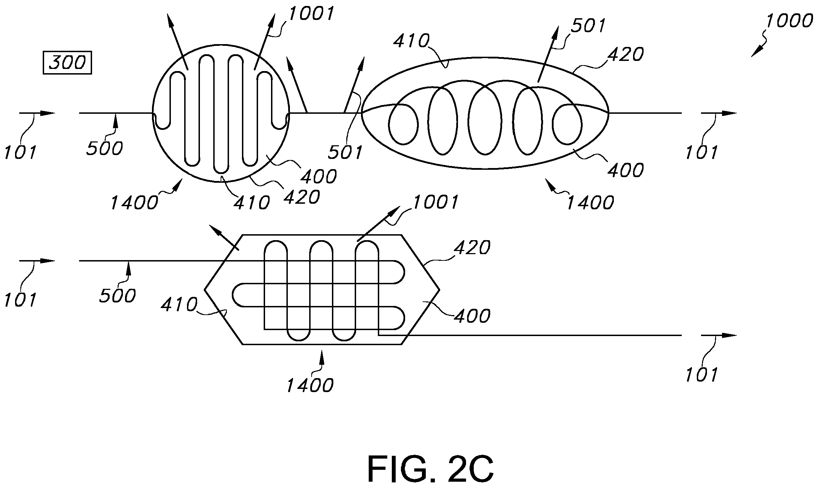

Fig. 2C schematically depicts an embodiment of the light generating system. In embodiments, the optical fiber 500 may be configured in one or more of a meandering a configuration, a stacked configuration, a spiral configuration, and an interleaved configuration. Further, in embodiments, the light chamber 400 may comprise a cross-sectional shape selected from the group of circular, elliptical, rectangular and n-gonal, wherein n is at least 5. In embodiments, the chamber exit window 420 may comprise a diffuser for the second light 501. Especially, the reflective internal surface 410 is diffusively reflective. In the depiction of the embodiment, in the figure, one of the light generating units 1400 has a circular cross-sectional shape within which the optical fiber 500 is arranged in a meandering configuration. In the embodiments, another light generating unit 1400 has an elliptical cross-sectional shape within which the optical fiber 500 is arranged in a spiral configuration. In the embodiment, yet another light generating unit 1400 has a hexagonal cross-sectional shape within which the optical fiber has a stacked configuration.

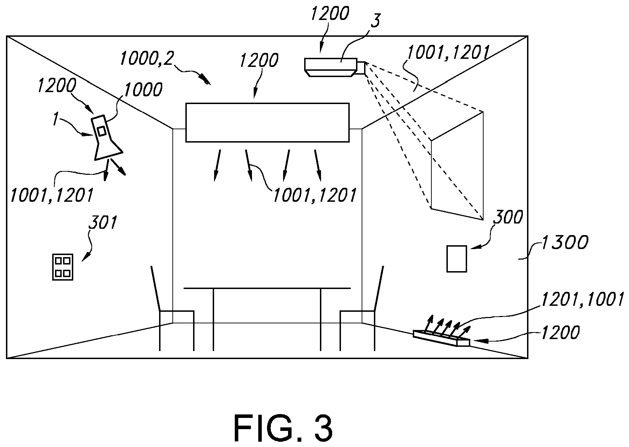

Fig. 3 schematically depicts an embodiment of a lighting device 1200. In embodiments, a lighting device 1200 may be selected from the group of a lamp 1, a luminaire 2, a projector device 3, a disinfection device, a photochemical reactor, and an optical wireless communication device, comprising the light generating system 1000 as described herein. Reference 301 indicates a user interface which may be functionally coupled with the control system 300 comprised by or functionally coupled to the light generating system 1000. The figure also schematically depicts an embodiment of lamp 1 comprising the light generating system 1000. Reference 3 indicates a projector device or projector system, which may be used to project images, such as at a wall, which may also comprise the light generating system 1000. In embodiments, such lighting device may be a lamp 1, a luminaire 2, a projector device 3, a disinfection device, or an optical wireless communication device. Lighting device light escaping from the lighting device 1200 is indicated with reference 1201. Lighting device light 1201 may essentially consist of system light 1001, and may in specific embodiments thus be system light 1001.

The term "plurality" refers to two or more.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%.

The term "comprise" also includes embodiments wherein the term "comprises" means "consists of". The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species". Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation. It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "to comprise" and its conjugations does not exclude the presence of elements or steps other than those stated in a claim. Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to".

The article "a" or "an" preceding an element does not exclude the presence of a plurality of such elements.

## Claims

1. A light generating system (1000) comprising a light generating device (100), an optical fiber (500), and a light generating unit (1400), wherein:
- the light generating device (100) is configured to generate device light (101) comprising a first wavelength, wherein the light generating device (100) comprises a solid-state light source;
- the optical fiber (500) comprises an elongated body of light transmissive material, transmissive for the device light (101) comprising the first wavelength; wherein the optical fiber (500) comprises a light entrance part (511); wherein the optical fiber (500) has a length L1 and an elongated outer surface (512) over at least part of its length L1; wherein the optical fiber (500) is configured such that upon irradiating the light entrance part (511) with the device light (101) comprising the first wavelength, over at least part of its length L1 second light (501) escapes from the optical fiber (500) via the elongated outer surface (512);
- the light generating unit (1400) comprises a light chamber (400); wherein the light chamber (400) comprises a reflective internal surface (410), reflective for the second light (501), and a chamber exit window (420), transmissive for the second light (501);
- at least part of the optical fiber (500) having a chamber fiber length L2 is configured within the light chamber (400) with n1 curvatures (550) in a plane parallel to a length axis (A) of the optical fiber (500), wherein n1≥1;
- the light generating system (1000) is configured to generate system light (1001) comprising at least part of the second light (501), **characterized by**
- the light generating system (1000) comprising two or more optical fibers (500) and two or more light generating devices (100), configured in two or more sets of each an optical fiber (500) and one or more light generating devices (100), wherein the light entrance part (511) is configured downstream from these one or more light generating devices (100), wherein spectral power distributions of the second light (501) of two or more optical fibers (500) are different; wherein the light generating system (1000) further comprises a control system (300) configured to control a spectral power distribution of the system light (1001), wherein the system light (1001) comprises at least part of the second light (501) of one or more optical fibers (500).

2. The light generating system (1000) according to claim 1, wherein the solid-state light source (100) comprises a laser.

3. The light generating system (1000) according to any one of the preceding claims, wherein the solid-state light source (100) comprises a diode laser, and wherein the device light (101) comprises diode laser light; and wherein the system light (1001) comprises one or more of:
- device light (101), and
- converted device light (201), wherein the optical fiber (500) comprises a luminescent material (200) configured to convert at least part of the device light (101) into the converted device light (201).

4. The light generating system (1000) according to claim 3, wherein the optical fiber (500) comprises a core (502) comprising the light transmissive material, and a cladding (503) surrounding the core (502), wherein the optical fiber (500) further comprises light outcoupling elements (510); wherein the cladding comprises the luminescent material (200); wherein the device light (101) comprises one or more of UV light and blue light, and wherein the system light (1001) is white light.

5. The light generating system (1000) according to any one of the preceding claims, wherein the light chamber (400) comprises an internal chamber length, L3, and an internal chamber width, W3; wherein L2>(π*sqrt(L3*W3)).

6. The light generating system (1000) according to claim 5, wherein L2≥3*(π*sqrt(L3*W3)).

7. The light generating system (1000) according to any one of the preceding claims, wherein the optical fiber (500) has a fiber diameter, D1, wherein the n1 curvatures (550) have curvature radii, Rc, wherein Rc<10*D1.

8. The light generating system (1000) according to claim 7, comprising k1 curvatures (550) per square centimeter, wherein k1>10.

9. The light generating system (1000) according to any one of the preceding claims 7-8, wherein the curvatures (550) are arranged such that an area Ai of the Voronoi cells from a 2D Voronoi tessellation of an area comprising a projection of the curvatures (550) is selected from the range of 0.7-1.3 times the average area of all the Voronoi cells in the 2D Voronoi tessellation.

10. The light generating system (1000) according to any one of the preceding claims, wherein the optical fiber (500) is configured in one or more of a meandering configuration, a stacked configuration, spiral configuration, and an interleaved configuration.

11. The light generating system (1000) according to any one of the preceding claims, wherein part of the optical fiber (500) is configured external from the light chamber (400); and wherein during operation of the light generating device (100), at least part of the second light (501) escapes from the optical fiber (500) external from the light chamber (400).

12. The light generating system (1000) according to any one of the preceding claims, comprising a plurality of light generating units (1400), wherein at least two light generating units (1400) share the same optical fiber (500).

13. The light generating system (1000) according to any one of the preceding claims, comprising two or more optical fibers (500) and two or more light generating devices (100), configured in two or more sets of each an optical fiber (500) and one light generating device (100), wherein the light entrance part (511) is configured downstream from these one or more light generating devices (100), wherein spectral power distributions of the second light (501) of two or more optical fibers (500) are different; wherein the light generating system (1000) further comprises a control system (300) configured to control a spectral power distribution of the system light (1001), wherein the system light (1001) comprises at least part of the second light (501) of one or more optical fibers (500).

14. The light generating system (1000) according to any one of the preceding claims, wherein the light chamber (400) comprises a cross-sectional shape selected from the group of circular, elliptical, rectangular and n-gonal, wherein n is at least 5; wherein the chamber exit window (420) comprises a diffuser for the second light (501); wherein the reflective internal surface (410) is diffusively reflective.

15. A lighting device (1200) selected from the group of a lamp (1) and a luminaire (2), comprising the light generating system (1000) according to any one of the preceding claims.

## Patentansprüche

1. Lichterzeugungssystem (1000), umfassend eine Lichterzeugungsvorrichtung (100), eine optische Faser (500) und eine Lichterzeugungseinheit (1400), wobei:
- die Lichterzeugungsvorrichtung (100) konfiguriert ist, um ein Vorrichtungslicht (101) zu erzeugen, das eine erste Wellenlänge umfasst, wobei die Lichterzeugungsvorrichtung (100) eine Festkörperlichtquelle umfasst;
- die optische Faser (500) einen länglichen Körper aus lichtdurchlässigem Material umfasst, der für das Vorrichtungslicht (101) durchlässig ist, das die erste Wellenlänge umfasst; wobei die optische Faser (500) einen Lichteintrittsteil (511) umfasst; wobei die optische Faser (500) eine Länge L1 und eine längliche Außenoberfläche (512) über mindestens einen Teil ihrer Länge L1 aufweist; wobei die optische Faser (500) so konfiguriert ist, dass beim Bestrahlen des Lichteintrittsteils (511) mit dem Vorrichtungslicht (101), das die erste Wellenlänge umfasst, über mindestens einen Teil ihrer Länge L1 zweites Licht (501) aus der optischen Faser (500) über die längliche Außenoberfläche (512) austritt;
- die Lichterzeugungseinheit (1400) eine Lichtkammer (400) umfasst; wobei die Lichtkammer (400) eine reflektierende Innenoberfläche (410), die reflektierend für das zweite Licht (501) ist, und ein Kammeraustrittsfenster (420), das durchlässig für das zweite Licht (501) ist, umfasst;
- mindestens ein Teil der optischen Faser (500), der eine Kammerfaserlänge L2 aufweist, innerhalb der Lichtkammer (400) mit n1 Krümmungen (550) in einer Ebene parallel zu einer Längsachse (A) der optischen Faser (500) konfiguriert ist, wobei n1≥1;
- das Lichterzeugungssystem (1000) konfiguriert ist, um Systemlicht (1001) zu erzeugen, umfassend mindestens einen Teil des zweiten Lichts (501); **gekennzeichnet durch**
- das Lichterzeugungssystem (1000), umfassend zwei oder mehr optische Fasern (500) und zwei oder mehr Lichterzeugungsvorrichtungen (100), konfiguriert in zwei oder mehr Sätzen von jeweils einer optischen Faser (500) und einer oder mehreren Lichterzeugungsvorrichtungen (100), wobei der Lichteintrittsteil (511) stromabwärts von dieser einen oder diesen mehreren Lichterzeugungsvorrichtungen (100) konfiguriert ist, wobei Spektralverteilungen des zweiten Lichts (501) von zwei oder mehr optischen Fasern (500) unterschiedlich sind; wobei das Lichterzeugungssystem (1000) ferner ein Steuersystem (300) umfasst, das konfiguriert ist, um eine Spektralverteilung des Systemlichts (1001) zu steuern, wobei das Systemlicht (1001) mindestens einen Teil des zweiten Lichts (501) einer oder mehrerer optischer Fasern (500) umfasst.

2. Lichterzeugungssystem (1000) nach Anspruch 1, wobei die Festkörperlichtquelle (100) einen Laser umfasst.

3. Lichterzeugungssystem (1000) nach einem der vorstehenden Ansprüche, wobei die Festkörperlichtquelle (100) einen Diodenlaser umfasst, und wobei das Vorrichtungslicht (101) Diodenlaserlicht umfasst; und wobei das Systemlicht (1001) eines oder mehrere der Folgenden umfasst:
- Vorrichtungslicht (101), und
- umgewandeltes Vorrichtungslicht (201), wobei die optische Faser (500) einen Leuchtstoff (200) umfasst, der konfiguriert ist, um mindestens einen Teil des Vorrichtungslichts (101) in das umgewandelte Vorrichtungslicht (201) umzuwandeln.

4. Lichterzeugungssystem (1000) nach Anspruch 3, wobei die optische Faser (500) einen Kern (502) umfasst, der das lichtdurchlässige Material und eine Ummantelung (503) umfasst, die den Kern (502) umgibt, wobei die optische Faser (500) ferner Lichtauskopplungselemente (510) umfasst; wobei die Ummantelung den Leuchtstoff (200) umfasst; wobei das Vorrichtungslicht (101) eines oder mehrere von UV-Licht und blauem Licht umfasst, und wobei das Systemlicht (1001) weißes Licht ist.

5. Lichterzeugungssystem (1000) nach einem der vorstehenden Ansprüche, wobei die Lichtkammer (400) eine innere Kammerlänge, L3, und eine innere Kammerbreite, W3, umfasst; wobei L2>(π*sqrt(L3*W3)).

6. Lichterzeugungssystem (1000) nach Anspruch 5, wobei L2≥3*(π*sqrt(L3*W3)).

7. Lichterzeugungssystem (1000) nach einem der vorstehenden Ansprüche, wobei die optische Faser (500) einen Faserdurchmesser, D1, aufweist, wobei die n1 Krümmungen (550) Krümmungsradien, Rc, aufweisen, wobei Rc<10*D1.

8. Lichterzeugungssystem (1000) nach Anspruch 7, umfassend k1 Krümmungen (550) pro Quadratzentimeter, wobei k1≥10.

9. Lichterzeugungssystem (1000) nach einem der vorstehenden Ansprüche 7 bis 8, wobei die Krümmungen (550) derart angeordnet sind, dass eine Fläche Ai der Voronoi-Zellen aus einer 2D-Voronoi-Tessellierung einer Fläche, die eine Projektion der Krümmungen (550) umfasst, aus dem Bereich des 0,7- bis 1,3-fachen der durchschnittlichen Fläche aller Voronoi-Zellen in der 2D-Voronoi-Tessellierung ausgewählt ist.

10. Lichterzeugungssystem (1000) nach einem der vorstehenden Ansprüche, wobei die optische Faser (500) in einer oder mehreren von einer mäandrierenden Konfiguration, einer gestapelten Konfiguration, einer spiralförmigen Konfiguration und einer verschachtelten Konfiguration konfiguriert ist.

11. Lichterzeugungssystem (1000) nach einem der vorstehenden Ansprüche, wobei ein Teil der optischen Faser (500) außerhalb der Lichtkammer (400) konfiguriert ist; und wobei während des Betriebs der Lichterzeugungsvorrichtung (100) mindestens ein Teil des zweiten Lichts (501) aus der optischen Faser (500) außerhalb der Lichtkammer (400) austritt.

12. Lichterzeugungssystem (1000) nach einem der vorstehenden Ansprüche, umfassend eine Vielzahl von Lichterzeugungseinheiten (1400), wobei mindestens zwei Lichterzeugungseinheiten (1400) dieselbe optische Faser (500) teilen.

13. Lichterzeugungssystem (1000) nach einem der vorstehenden Ansprüche, umfassend zwei oder mehr optische Fasern (500) und zwei oder mehr Lichterzeugungsvorrichtungen (100), konfiguriert in zwei oder mehr Sätzen von jeweils einer optischen Faser (500) und einer Lichterzeugungsvorrichtung (100), wobei der Lichteintrittssteil (511) stromabwärts von dieser einen oder diesen mehreren Lichterzeugungsvorrichtungen (100) konfiguriert ist, wobei Spektralverteilungen des zweiten Lichts (501) von zwei oder mehr optischen Fasern (500) unterschiedlich sind; wobei das Lichterzeugungssystem (1000) ferner ein Steuersystem (300) umfasst, das konfiguriert ist, um eine Spektralverteilung des Systemlichts (1001) zu steuern, wobei das Systemlicht (1001) mindestens einen Teil des zweiten Lichts (501) einer oder mehrerer optischer Fasern (500) umfasst.

14. Lichterzeugungssystem (1000) nach einem der vorstehenden Ansprüche, wobei die Lichtkammer (400) eine Querschnittform umfasst, die aus der Gruppe von kreisförmig, elliptisch, rechteckig und n-eckig ausgewählt ist, wobei n mindestens 5 ist; wobei das Kammeraustrittsfenster (420) einen Diffusor für das zweite Licht (501) umfasst; wobei die reflektierende Innenoberfläche (410) diffus reflektierend ist.

15. Beleuchtungsvorrichtung (1200), die aus der Gruppe einer Lampe (1) und einer Leuchte (2), umfassend das Lichterzeugungssystem (1000) nach einem der vorstehenden Ansprüche, ausgewählt ist.

## Revendications

1. Système de génération de lumière (1000) comprenant un premier dispositif de génération de lumière (100), une fibre optique (500), et une unité de génération de lumière (1400), dans lequel :
- le dispositif de génération de lumière (100) est configuré pour générer une lumière de dispositif (101) comprenant une première longueur d'onde, dans lequel le dispositif de génération de lumière (100) comprend une source de lumière à semi-conducteurs ;
- la fibre optique (500) comprend un corps allongé de matériau transmettant la lumière, transmettant pour la lumière de dispositif (101) comprenant la première longueur d'onde ; dans lequel la fibre optique (500) comprend une partie d'entrée de lumière (511) ; dans lequel la fibre optique (500) a une longueur L1 et une surface externe allongée (512) sur au moins une partie de sa longueur L1 ; dans lequel la fibre optique (500) est configurée de telle sorte que, lors de l'exposition de la partie d'entrée de lumière (511) à la lumière de dispositif (101) comprenant la première longueur d'onde, sur au moins une partie de sa longueur, une seconde lumière L1 (501) s'échappe de la fibre optique (500) par l'intermédiaire de la surface externe allongée (512) ;
- l'unité de génération de lumière (1400) comprend une chambre de lumière (400) ; dans lequel la chambre de lumière (400) comprend une surface interne réfléchissante (410), réfléchissante pour la seconde lumière (501), et une fenêtre de sortie de chambre (420), transmettant pour la seconde lumière (501) ;
- au moins une partie de la fibre optique (500) ayant une longueur de fibre de chambre L2 est configurée à l'intérieur de la chambre de lumière (400) avec n1 courbures (550) dans un plan parallèle à un axe de longueur (A) de la fibre optique (500), dans lequel n1 ≥ 1 ;
- le système de génération de lumière (1000) est configuré pour générer de la lumière système (1001) comprenant au moins une partie de la seconde lumière (501), **caractérisé par**
- le système de génération de lumière (1000) comprenant deux fibres optiques (500) ou plus et deux dispositifs de génération de lumière (100) ou plus, configurés en deux ensembles ou plus de chacun une fibre optique (500) et un ou plusieurs dispositifs de génération de lumière (100), dans lequel la partie d'entrée de lumière (511) est configurée en aval de ces un ou plusieurs dispositifs de génération de lumière (100), dans lequel des répartitions de puissance spectrale de la seconde lumière (501) de deux fibres optiques (500) ou plus sont différentes ; dans lequel le système de génération de lumière (1000) comprend en outre un système de commande (300) configuré pour commander une répartition de puissance spectrale de la lumière système (1001), dans lequel la lumière système (1001) comprend au moins une partie de la seconde lumière (501) d'une ou plusieurs fibres optiques (500).

2. Système de génération de lumière (1000) selon la revendication 1, dans lequel la source de lumière à semi-conducteurs (100) comprend un laser.

3. Système de génération de lumière (1000) selon l'une quelconque des revendications précédentes, dans lequel la source de lumière à semi-conducteurs (100) comprend une diode laser, et dans lequel la lumière de dispositif (101) comprend une lumière de laser à diodes ; et dans lequel la lumière système (1001) comprend un ou plusieurs parmi :
- une lumière de dispositif (101), et
- une lumière de dispositif convertie (201), dans lequel la fibre optique (500) comprend un matériau luminescent (200) configuré pour convertir au moins une partie de la lumière de dispositif (101) en lumière de dispositif convertie (201).

4. Système de génération de lumière (1000) selon la revendication 3, dans lequel la fibre optique (500) comprend un coeur (502) comprenant le matériau transmettant la lumière, et une gaine (503) entourant le coeur (502), dans lequel la fibre optique (500) comprend en outre des éléments de découplage de lumière (510) ; dans lequel la gaine comprend le matériau luminescent (200) ; dans lequel la lumière de dispositif (101) comprend une ou plusieurs parmi une lumière UV et une lumière bleue, et dans lequel la lumière système (1001) est une lumière blanche.

5. Système de génération de lumière (1000) selon l'une quelconque des revendications précédentes, dans lequel la chambre de lumière (400) comprend une longueur de chambre interne, L3, et une largeur de chambre interne, W3 ; dans lequel L2 > (π*sqrt(L3*W3)).

6. Système de génération de lumière (1000) selon la revendication 5, dans lequel L2 ≥ 3*(π*sqrt(L3*W3)).

7. Système de génération de lumière (1000) selon l'une quelconque des revendications précédentes, dans lequel la fibre optique (500) a une diamètre de fibre, D1, dans lequel les n1 courbures (550) ont des rayons de courbure, Rc, dans lequel Rc < 10*D1.

8. Système de génération de lumière (1000) selon la revendication 7, comprenant k1 courbures (550) par centimètre carré, dans lequel k1 ≥ 10.

9. Système de génération de lumière (1000) selon l'une quelconque des revendications précédentes 7 à 8, dans lequel les courbures (550) sont agencées de telle sorte qu'une zone Ai des cellules de Voronoï à partir d'une tessellation de Voronoï 2D d'une zone comprenant une projection des courbures (550) est choisie dans la plage de 0,7 à 1,3 fois la zone moyenne de toutes les cellules de Voronoï dans la tessellation de Voronoï 2D.

10. Système de génération de lumière (1000) selon l'une quelconque des revendications précédentes, dans lequel la fibre optique (500) est configurée dans une ou plusieurs parmi une configuration en méandres, une configuration empilée, une configuration en spirale et une configuration entrelacée.

11. Système de génération de lumière (1000) selon l'une quelconque des revendications précédentes, dans lequel une partie de la fibre optique (500) est configurée à l'extérieur de la chambre de lumière (400) ; et dans lequel, pendant un fonctionnement du dispositif de génération de lumière (100), au moins une partie de la seconde lumière (501) s'échappe de la fibre optique (500) à l'extérieur de la chambre de lumière (400).

12. Système de génération de lumière (1000) selon l'une quelconque des revendications précédentes, comprenant une pluralité d'unités de génération de lumière (1400), dans lequel au moins deux unités de génération de lumière (1400) partagent la même fibre optique (500).

13. Système de génération de lumière (1000) selon l'une quelconque des revendications précédentes, comprenant deux fibres optiques (500) ou plus et deux dispositifs de génération de lumière (100) ou plus, configurés en deux ensembles ou plus de chacun une fibre optique (500) et un dispositif de génération de lumière (100), dans lequel la partie d'entrée de lumière (511) est configurée en aval de ces un ou plusieurs dispositifs de génération de lumière (100), dans lequel des répartitions de puissance spectrale de la seconde lumière (501) de deux fibres optiques (500) ou plus sont différentes ; dans lequel le système de génération de lumière (1000) comprend en outre un système de commande (300) configuré pour commander une répartition de puissance spectrale de la lumière système (1001), dans lequel la lumière système (1001) comprend au moins une partie de la seconde lumière (501) d'une ou plusieurs fibres optiques (500).

14. Système de génération de lumière (1000) selon l'une quelconque des revendications précédentes, dans lequel la chambre de lumière (400) comprend une forme de section transversale choisie dans le groupe constitué de formes circulaire, elliptique, rectangulaire et n-gonale, n étant au moins égal à 5 ; dans lequel la fenêtre de sortie de chambre (420) comprend un diffuseur pour la seconde lumière (501) ; dans lequel la surface interne réfléchissante (410) est réfléchissante de manière diffusive.

15. Dispositif d'éclairage (1200) choisi dans le groupe constitué d'une lampe (1), d'un luminaire (2), comprenant le système de génération de lumière (1000) selon l'une quelconque des revendications précédentes.
